# EUROPÄISCHE PATENTANMELDUNG

(11) **EP 0 949 737 A2**
(43) Veröffentlichungstag der Anmeldung: **13.10.1999**
(21) Anmeldenummer: 99105945.2
(22) Anmeldetag: 24.03.1999
(51) Int. Cl.: H02H 11/00

(54) **Verpolschutzschaltung**

(30) Priorität: 06.04.1998 DE 19815372
(71) Anmelder: SIEMENS AKTIENGESELLSCHAFT, 80333 München (DE)
(72) Erfinder: Reiss, Herbert, Dipl.-Ing., 92256 Hahnbach (DE)

(57) **Zusammenfassung**

Verpolschutzschaltung mit einem positiven Eingangskontakt (1), einem negativen Eingangskontakt (2), einem positiven Ausgangskontakt (3) und einem negativen Ausgangskontakt (4), wobei negativer Eingangskontakt (2) und negativer Ausgangskontakt (4) direkt elektrisch leitend miteinander verbunden sind und wobei im Strompfad zwischen positiven Eingangskontakt (1) und positiven Ausgangskontakt (3) ein Schaltkontakt (6) vorgesehen ist, wobei zwischen positiven Eingangskontakt (1) und negativen Eingangskontakt (2) eine Reihenschaltung eines Relais (5) zur Ansteuerung des Schaltkontaktes (6) und eine zur Polschutzdiode (7) angeschlossen ist, wobei die zur Polschutzdiode (7) so geschaltet ist, daß bei korrekt beschalteten Eingangskontakten (1, 2) ein Stromfluß ermöglicht ist.

## Beschreibung

Die vorliegende Erfindung betrifft eine Verpolschutzschaltung, mit der die Stromrichtung geprüft und bei richtiger Polarität die Energieversorgung eines an die Verpolschutzschaltung anschließbaren Verbrauchers zugeschaltet wird.

Elektrische Geräte benötigen für den Betrieb eine Energieversorgung. Bei Gleichspannungsnetzen besteht dabei die Möglichkeit, die Leitungen der Energieversorgung fehlerhaft anzuschließen und damit eine Verpolung zu bewirken, die zur Zerstörung des Gerätes führen kann. Mit der Verpolschutzschaltung für Gleichspannungsversorgungen soll die Gefahr der Zerstörung der anschließbaren Geräte durch Verpolung verhindert werden.

Bei kleinen Strömen wird als Schutzvorrichtung in den meisten Fällen eine Gleichrichterdiode verwendet. Bei größeren Strömen werden entweder Gleichrichtermodule oder Tyristoren verwendet. Der Nachteil dieser bekannten Lösungen ist die hohe Verlustleistung, die in Wärme umgesetzt wird.

Die Aufgabe der Erfindung besteht daher darin, eine Verpolschutzschaltung für Gleichspannungsversorgunge anzugeben, mit der hohe Gleichströme mit relativ geringer Verlustleistung gegen Verpolung geschützt werden.

Diese Aufgabe wird mit einer Verpolschutzschaltung mit einem positiven Eingangskontakt, einem negativen Eingangskontakt, einem positiven Ausgangskontakt und einem negativen Ausgangskontatk, wobei negativer Eingangskontakt und negativer Ausgangskontakt direkt elektrisch leitend miteinander verbunden sind und wobei im Strompfad zwischen positiven Eingangskontakt und positiven Ausgangskontakt ein Schaltkontakt vorgesehen ist, wobei zwischen positiven Eingangskontakt und negativen Eingangskontakt eine Reihenschaltung eines Relais zur Ansteuerung des Schaltkontaktes und eine Verpolschutzdiode angeschlossen ist, wobei die zur Verpolschutzdiode so geschaltet ist, daß bei korrekt beschalteten Eingangskontakten ein Stromfluß ermöglicht ist, gelöst.

Wenn parallel zu dem Relais eine Freilaufdiode angschlossen ist, werden induzierte Spannungen der Magnetspule des Relais über diese Freilaufdiode abgeleitet.

Weitere Merkmale, Vorteile und Anwendungsmöglichkeiten der vorliegenden Erfindung ergeben sich aus den Unteransprüchen, der nachfolgenden Beschreibung eines Ausführungsbeispiels anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Patentansprüchen oder dere Rückbeziehung.

Dabei zeigt:

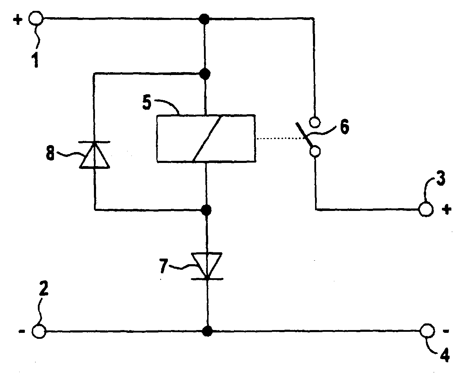

FIG 1 eine Verpolschutzschaltung.

Gemäß FIG 1 weist die Verpolschutzschaltung einen positiven Eingangskontakt 1 und einen negativen Eingangskontakt 2 auf. Mittels dieser Eingangskontakte 1, 2 ist die Stromversorgungsschaltung an eine Gleichspannungsguelle als Stromversorgungseinrichtung anschließbar. Ferner weist die Verpolschutzschaltung einen positiven Ausgangskontakt 3 und einen negativen Ausgangskontakt 4 auf. An diese Ausgangskontakte 3, 4 ist ein gegen Verpolung zu schützender Verbraucher anschließbar. In dem Strompfad zwischen positiven Eingangskontakt 1 und Positiven Ausgangskontakt 3 ist ein Schaltkontakt 6 vorgesehen, der, von einem Relais 5 angesteuert, bei Anschluß der Spannungsversorgung an die Verpolschutzschaltung derart, daß die Stromrichtung vom Pluspol zum Minuspol geht, die Durchschaltung der Spannungsversorgung an den Verbraucher bewirkt. Dazu ist zwischen positiven Eingangskontakt 1 und negativen Eingangskontakt 2 eine Reihenschaltung eines Relais 5 zur Ansteuerung des Schaltkontaktes 6 und einer Verpolschutzdiode 6 angeschlossen. Bei korrekt beschalteten Eingangskontakten 1, 2, bei denen die Spannungsversorgung die Verpolschutzschaltung derart angeschlossen ist, daß die Stromrichtung vom Pluspol zum Minuspol geht, fließt der Strom durch die Verpolschutzdiode 7, so daß das Relais 5 anzieht und den Schaltkontakt 6 schließt, mithin also die an die Eingangskontakte 1, 2 angelegte Versorgungsspannung an den Ausgangskontakten 3, 4 zum Abgriff durch den angeschlossenen Verbraucher zur Verfügung steht.

Liegt dagegen eine Verpolung vor, d.h. der positive Eingangskontakt 1 ist fehlerhaft an den negativen Ausgang der Spannungsversorgungseinrichtung und der negative Eingangskontakt 2 ist fehlerhaft an den positiven Ausgangskontakt der Spannungsversorgungseinrichtung angeschlossen, so sperrt die Verpolschutzdiode 7 den Stromfluß durch das Relais 5, so daß der Schaltkontakt 6 geöffnet bleibt und damit entsprechend an den Ausgängen 3, 4 der Verpolschutzschaltung keine Spannung anliegt.

Zur Ableitung induzierter Spannungen der Magnetspule des Relais 5 ist die parallel zum Relais 5 angeschlossene Freilaufdiode 8 vorgesehen, die zur Verpolschutzdiode antiparallel geschaltet ist.

Die Erfindung zeichnet sich dadurch aus, daß hohe Gleichströme mit relativ geringer Verlustleistung gegen Verpolung geschützt werden, wobei die Verlustleistung (Wärmeentwicklung) nur aus den Kontaktübergängen der Verpolschutzschaltung resultiert. Die Warmeverluste durch die Ansteuerung des Relais 5 sind bei hohen Strömen vernachlässigbar.

Ferner zeichnet sich die Verpolschutzschaltung gemäß der vorliegenden Erfindung dadurch aus, daß sie mit einem geringen Bauteilaufwand und einem damit einhergehenden geringen Kostenaufwand realisiert werden kann und gleichzeitig nur eine geringe Baugröße benötigt, was insbesondere die Integration der erfindungsgemäßen Verpolschutzschaltung in verschiedenste Verbraucher, insbesondere dezentraler Peripheriegeräte, z.B. zum Anschluß externer Sensorik, ermöglicht.

## Patentansprüche

1. Verpolschutzschaltung mit einem positiven Eingangskontakt (1), einem negativen Eingangskontakt (2), einem positiven Ausgangskontakt (3) und einem negativen Ausgangskontakt (4), wobei negativer Eingangskontakt (2) und negativer Ausgangskontakt (4) direkt elektrisch leitend miteinander verbunden sind und wobei im Strompfad zwischen positiven Eingangskontakt (1) und positiven Ausgangskontakt (3) ein Schaltkontakt (6) vorgesehen ist, wobei zwischen positiven Eingangskontakt (1) und negativen Eingangskontakt (2) eine Reihenschaltung eines Relais (5) zur Ansteuerung des Schaltkontaktes (6) und eine zur Polschutzdiode (7) angeschlossen ist, wobei die zur Polschutzdiode (7) so geschaltet ist, daß bei korrekt beschalteten Eingangskontakten (1, 2) ein Stromfluß ermöglicht ist.

2. Verpolschutzschaltung nach Anspruch 1, **dadurch gekennzeichnet,** daß parallel zum Relais (5) eine Freilaufdiode (8) angeschlossen ist.
